# EUROPEAN PATENT SPECIFICATION

(11) **EP 0 996 020 B1**
(45) Date of publication and mention of the grant of the patent: **30.03.2005**
(21) Application number: 99308006.8
(22) Date of filing: 11.10.1999
(51) Int. Cl.: G02B 26/10

(54) **Multi-laser scanning unit**
Multilaser Abtastvorrichtung
Unité de balayage multilaser

(30) Priority: 23.10.1998 KR 9844569
(43) Date of publication of application: 26.04.2000
(73) Proprietor: SAMSUNG ELECTRONICS CO., LTD., Suwon-City, Kyungki-do (KR)
(72) Inventor: Eum, Jae-yong, Paldal-gu, Suwon-city, Kyungki-do (KR); Choi, Hwan-young, Dongan-ku, Anyang-city, Kyungki-do (KR); Cho, Sung-min, Kangseo-gu, Seoul (KR); Lee, Moon-gyu, Paldal-gu, Suwon-city, Kyungki-do (KR); Min, Jee-hong, Suji-eup, Yongin-city, Kyungki-do (KR); Kim, Young-il, Suji-eub,Yongin-city, Kyungki-do 449-840 (KR)
(74) Representative: Robinson, Ian Michael

(56) References cited:
- DE-A- 3 446 354
- FR-A- 2 284 127
- US-A- 4 026 630
- US-A- 4 782 228
- US-A- 5 295 004
- JOHN HOWARD: "Novel scanning interferometer for two-dimensional plasma density measurements" REVIEW OF SCIENTIFIC INSTRUMENTS, vol. 61, no. 3, March 1990 (1990-03), pages 1086-1094, XP000104398 NEW YORK, US
- PATENT ABSTRACTS OF JAPAN vol. 7, no. 164 (P-211) [1309], 19 July 1983 (1983-07-19) & JP 58 072121 A (RICOH), 30 April 1983 (1983-04-30)

## Description

The present invention relates in general to a multi-laser scanning unit (LSU) capable of diffracting and scanning light incident from at least two light sources, and more particularly to a multi-LSU in which a plurality of scanning lines incident parallel onto a photoreceptor are also directionally the same.

In general, a multi-LSU is adopted in a color printer and is used to form a plurality of latent electrostatic images required to develop a color image in combination with a plurality of colors including yellow (Y), magenta (M), cyan (C), black (K) and the like. In this case, a plurality of scanning lines scanned by the multi-LSU and incident onto a photoreceptor such as a photosensitive belt or photosensitive drum must be parallel at predetermined intervals, such that scanning directions of the plurality of scanning lines are parallel each other.

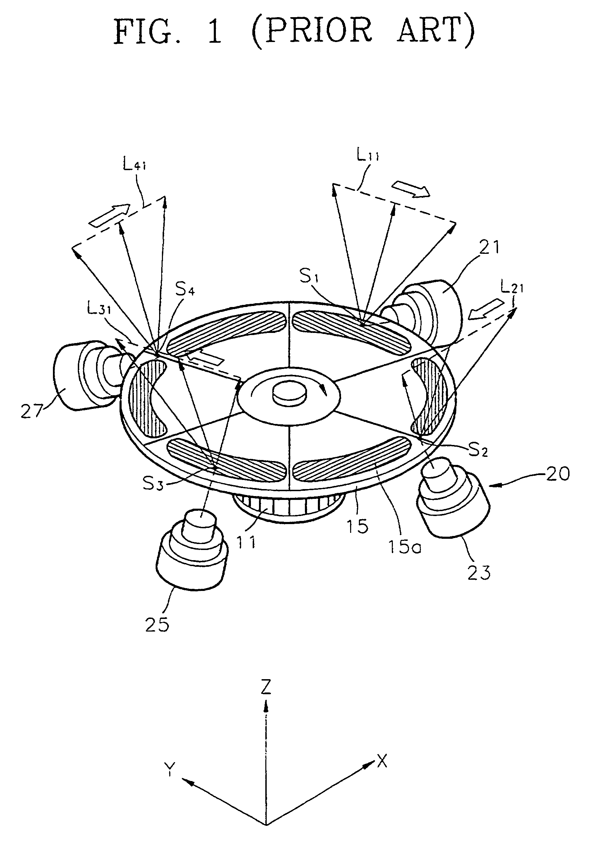

Referring to Figures 1 through 3, a conventional multi-LSU capable of generating four scanning lines corresponding to the colors Y, M, C and K includes a driving source 11 for providing a rotatory force, a deflection disk 15 having a plurality of sectors each with a hologram pattern 15a, and a light source unit 20 which is arranged facing one surface of the deflection disk 15 and radiates light onto the deflection disk 15. The light source unit 20 includes four light sources 21, 23, 25 and 27 which irradiate light onto four incident points S₁,S₂, S₃ and S₄, wherein each pair of points adjacent each other form a right angle at the rotary center of the deflection disk 15. Also, the four incident points S₁, S₂, S₃ and S₄ are positioned with equal radii from the rotary center of the deflection disk 15. Thus, the centers of the scanning lines formed by the deflection disk 15 passes the center of the deflection disk 15, thereby reducing off-axis.

The incident lights are diffracted by the hologram patterns 15a by rotation of the deflection disk 15 and form scanning lines L₁₁, L₂₁, L₃₁ and L₄₁ in the directions indicated by the arrow ( 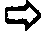 ). Here, the scanning lines L₁₁ and L₃₁ are parallel (to the Y-axis) and are opposite in direction. Also, the scanning line L₂₁ and L₄₁, perpendicular to the scanning lines L₁₁ and L₃₁, are parallel (to the X-axis) and are opposite in direction.

Traveling paths of the scanning lines L₁₁, L₂₁, L₃₁ and L₄₁ are changed by a plurality of mirrors such that the centers of the scanning lines travel along the X-axis. That is, the scanning line L₁₁ is reflected by a mirror M₁ to travel in the X-axis direction, and the scanning line L₂₁ is reflected by a mirror M₂₁ toward the rotary center of the deflection disk 15 and then reflected again by a mirror M₂₂ positioned on the rotary center of the deflection disk 15 to travel in the X-axis direction. Also, the scanning line L₃₁ is reflected by a mirror M₃ to travel in the X-axis direction, and the scanning line L₄₁ is reflected by a mirror M₄₁ toward the rotary center of the deflection disk 15 and then reflected again by a mirror M₄₂ positioned on the rotary center of the deflection disk 15 to travel in the X-axis direction.

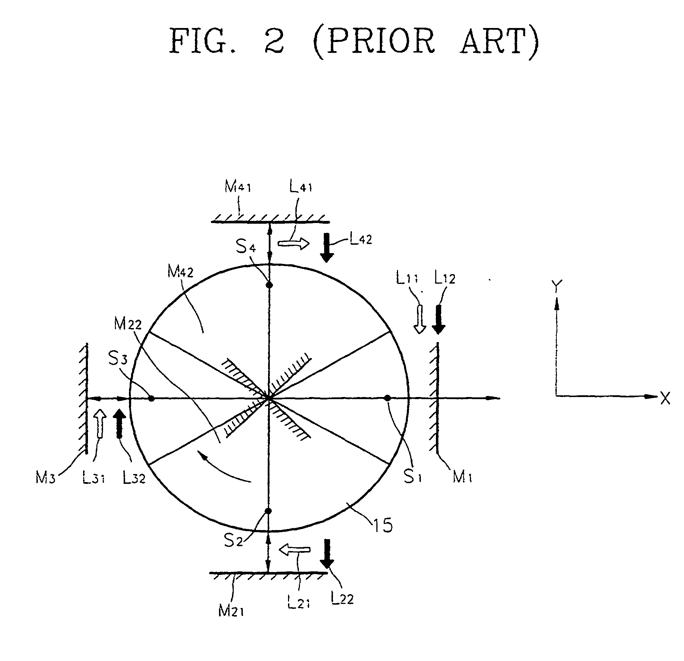

Scanning directions of scanning lines L₁₂, L₂₂, L₃₂ and L₄₂ scanning in the X-axis direction after being reflected by the mirrors M₁, M₂₁, M₂₂, M₃, M₄₁ and M₄₂ are indicated by the arrow (→) in Figure 2. As shown in Figure 2, the scanning lines L₁₂, L₂₂ and L₄₂ have the same scanning directions, but the direction of the scanning line L₃₂ is opposite to that of the scanning lines L₁₂, L₂₂ and L₄₂.

That is, in the case of using a plurality of mirrors and post holographic optical elements to change the traveling path of the light, after being reflected by the mirrors M₁, M₂₂, M₃ and M₄₂, the plurality of scanning lines are parallel in scanning directions for a photoreceptor, but the direction of the scanning line L₃₂ is still opposite to that of the others.

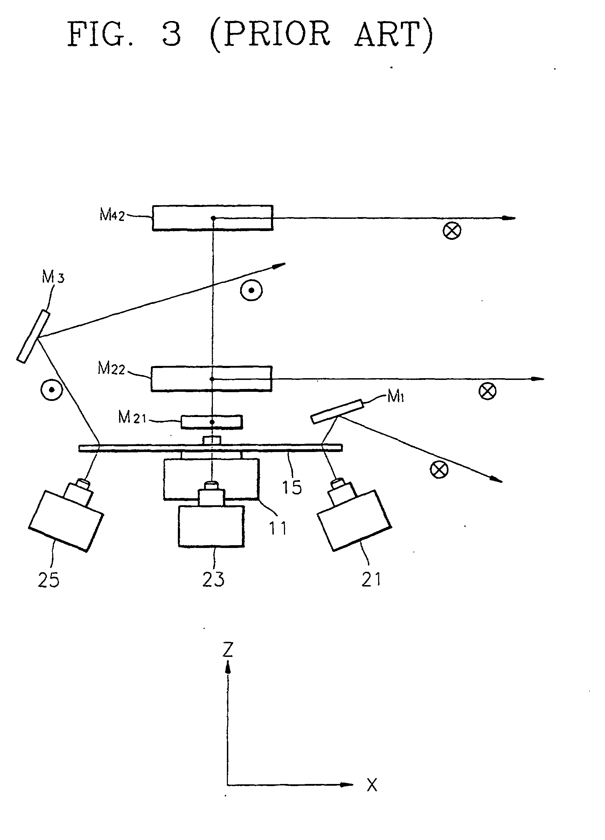

Thus, when forming an image on the photoreceptor, image information must be compensated for in circuitry due to the different scanning directions. That is, the light source 25 providing the scanning line L₃₂ must transfer the image data in the opposite direction to match image provided by the remaining light sources 21, 23 and 27. That is, there is a disadvantage in that the light sources 21, 23 and 27 provides image information in the direction indicated by ⊗ while the light source 25 provides image information in the direction indicated by ⊙ as shown in Figure 3, so the image data processing is complicated.

Document US-A-5295004 discloses an optical scanning unit comprising a motor for providing a rotary force, a deflection disk installed around a rotary shaft of the motor and a deflection disk having sectors with a hologram pattern for diffracting incident light. This document forms the pre-characterising portion of the claims appended hereto.

It is an aim of the present invention to provide a multi-laser scanning unit (LSU) in which the centers of a plurality of scanning lines formed by a deflection disk pass the rotary center of the deflection disk, and are parallel in the same scanning direction.

According to the present invention there is provided a multi-laser scanning unit as set forth in claim 1 appended hereto.

Preferred features of the invention will be apparent from the dependent claims and the description which follows.

In a preferred embodiment the multi-laser scanning unit (LSU) comprises: a driving source for providing a rotatory force; a deflection disk installed around a rotary shaft of the driving source, having at least two sectors with a hologram pattern for diffracting and deflecting incident light beams, for scanning the light beams through rotation; at least two light sources installed facing one surface of the deflection disk, for irradiating the light beams onto the at least two sectors of the deflection disk; the multi-laser scanning unit comprising: light beam path changing means for changing the direction of at least two scanning lines, each scanning line being formed by one of the light beams being scanned by the rotation of the deflection disk, such that the axis of each of the scanning lines or extended imaginary line of each of the scanning lines intersects the rotary axis of the deflection disk; and a scanning direction changing means for changing the direction of one scanning line generated by the deflection disk to its opposite direction, such that all scanning lines scan an image in a same scanning direction.

Preferably, the scanning direction changing means is a concave mirror arranged on the path of the light beam being scanned in the opposite scanning direction by the rotation of the deflection disk, and the concave mirror is for changing the scanning direction by converging and diverging the incident scanned light beam.

Preferably, the light path changing means comprises: a plurality of planar mirrors for reflecting the plurality of light beams scanned and deflected by the deflection disk to serve the light beam paths corresponding to each scan region of the image; a plurality of curved mirrors for condensing and reflecting the lights incident via the planar mirrors; and a plurality of holographic optical elements for diffracting the scanning lines reflected by the curved mirrors.

For a better understanding of the invention, and to show how embodiments of the same may be carried into effect, reference will now be made, by way of example, to the accompanying diagrammatic drawings in which:
Figure 1 is a schematic perspective view of the main portions of a conventional multi-laser scanning unit (LSU);
Figure 2 is a plan view showing the optical arrangement of the conventional multi-LSU for parallel scanning lines;
Figure 3 is a side view of Figure 2;
Figure 4 is a schematic perspective view of the main portions of a multi-LSU according to a preferred embodiment of the present invention;
Figure 5 is a plan view showing the multi-LSU shown in Figure 4;
Figure 6 is a schematic perspective view of the cylindrical concave mirror of Figure 5;
Figure 7 is a plan view of Figure 6; and
Figure 8 is a schematic view showing the optical arrangement of the multi-LSU according to the present invention.

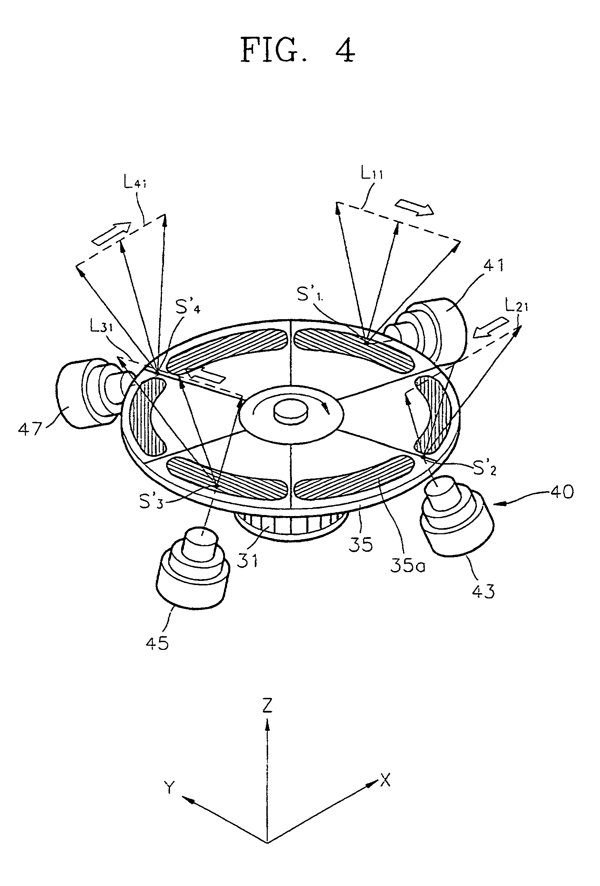

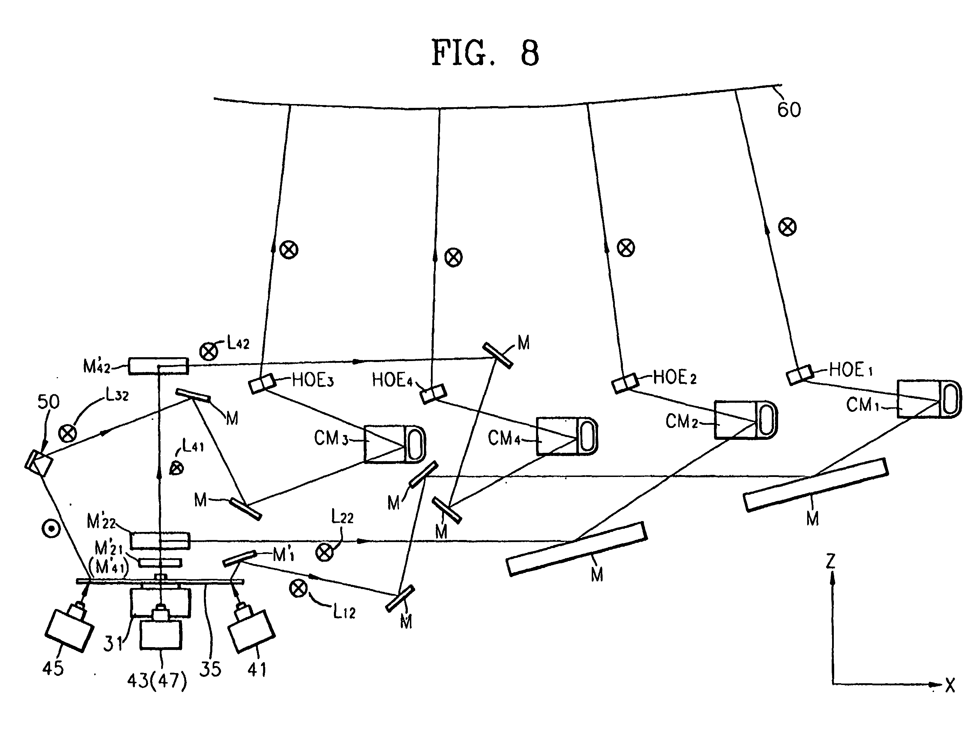

Referring to Figures 4 through 8, a multi-laser scanning unit (LSU) according to the preferred embodiment of the present invention includes a driving source 31 for providing a rotatory force, a deflection disk 35 having a plurality of sectors each with a hologram pattern 35a, a light source unit 40 which is arranged facing the bottom of the deflection disk 35 and irradiates beams onto the deflection disk 35, a light path changing means for changing a traveling direction of the light diffracted and scanned by the deflection disk 35, and a scanning direction changing means 50 for changing the scanning direction of one scanning line scanned in the opposite direction.

The light source unit 40 includes four light sources 41, 43, 45 and 47 corresponding to four colors, yellow (Y), magenta (M), cyan (C) and black (K) for four scanning lines. The lights irradiated by the four light sources 41, 43, 45 and 47 are incident onto incident points S₁, S₂', S₃' and S₄' of the deflection disk 35. Here, the incident points S₁', S₂', S₃' and S₄' form circles of the same radii R centered around the rotary center of the deflection disk 35, and form a right angle with adjacent incident points at the rotary center of the deflection disk.

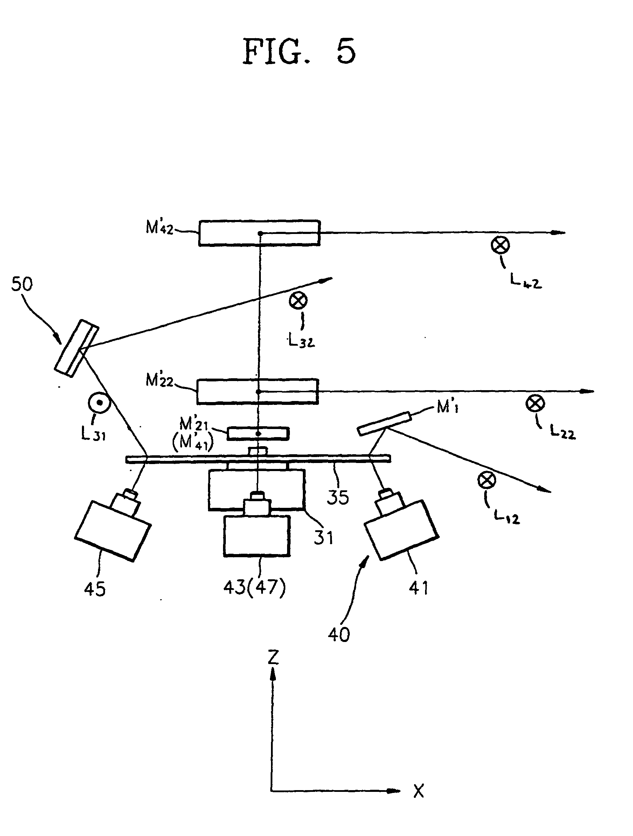

The lights are diffracted and scanned by the deflection disk 35 in the direction indicated by the arrow ( 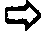 ) to form the scanning lines L₁, L₂, L₃ and L₄ and then the light travelling path is changed by the light path changing means such that the centers of the scanning lines L₁₁, L₂₁, L₃₁ and L₄₁ lie along the X-axis. Here, the light path changing means includes a plurality of planar mirrors M₁', M₂₁', M₂₂', M₄₁' and M₄₂'. The light corresponding to the scanning line L₁₁ is reflected by the planar mirror M₁' such that at the center of the scanning line it travels in the X-axis direction and the light corresponding to scanning line L₂₁ is reflected by the mirror M₂₁' toward the rotary center of the deflection disk 35 and then reflected again by the mirror M₂₂' positioned at the rotary center of the deflection disk to travel in the X-axis direction. Also, the light corresponding to scanning line L₄₁ is reflected again by the mirror M₄₂' positioned at the rotary center of the deflection disk 35 to travel in the X-axis direction. Here, the scanning lines L₁₁, L₂₁ and L₄₁ are scanned in the direction indicated by ⊗ while the scanning line L₃₁ is scanned in the direction indicated by ⊙ as shown in Figure 5. Thus, the scanning direction changing means 50 is placed on the optical path of the light corresponding to scanning line L₃₁ so as to change the scanning direction of the scanning line L₃₁ to the direction indicated by ⊗ as shown in Figure 5.

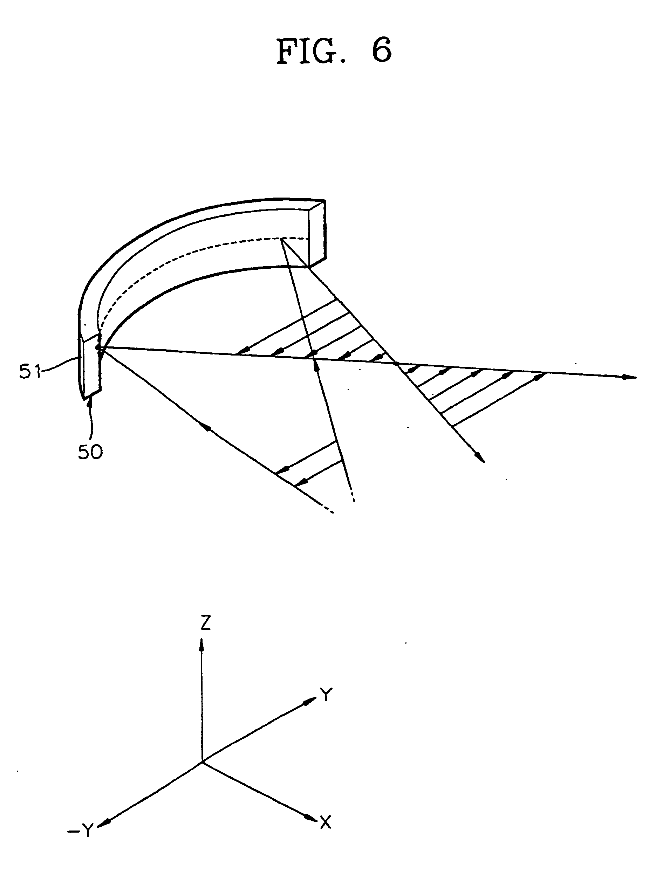

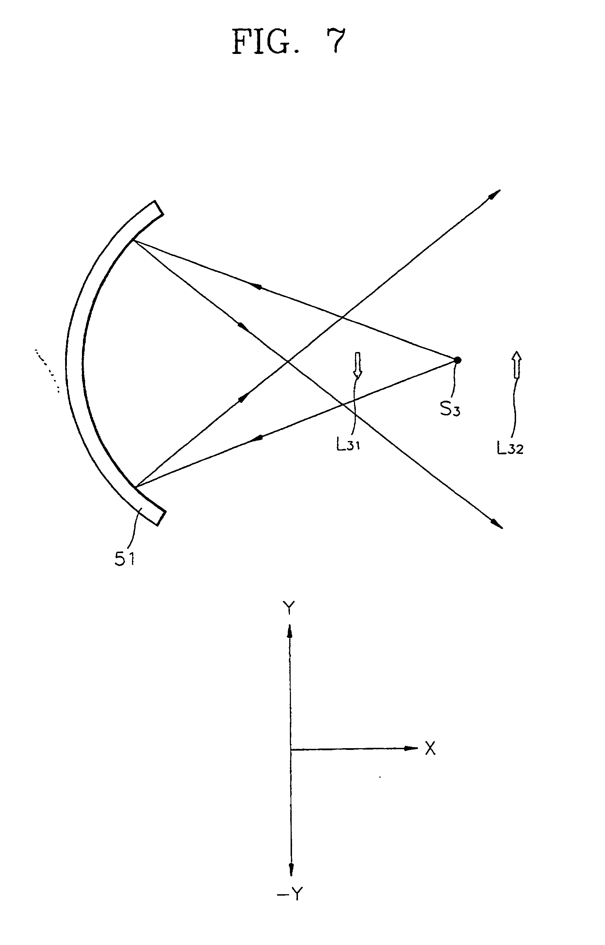

Preferably, the scanning direction changing means 50 is a cylindrical concave mirror 51, which is concave in the scanning direction. The concave mirror 51 converges the light forming the scanning line L₃₁ scanned in the -Y-axis direction (direction indicated by the arrow 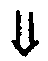 in Figure 7) from the incident point S₃ of the deflection disk 35, and diverges the light forming the scanning line L₃₂ in the Y-axis direction (direction indicated by the arrow ⇑ in Figure 7). Here, the curvature of the concave mirror 51 is determined in a range where the width of the diverging light is equal to that of the scanning line produced by reflection of the light by the mirror M₃ (see Figure 6).

The light forming the scanning line L₄₁ is reflected by the mirror M₄₁' toward the center of the deflection disk 35 and then reflected again by the mirror M₄₂' positioned at the rotary center of the reflection disk to travel in the X-axis. Here, the mirrors M₂₁', M₂₂', M₄₁' and M₄₂' are substantially the same as those of the mirrors M₂₁, M₂₂, M₄₁ and M₄₂, thus detailed explanation thereof will be omitted.

Thus, scanning lines L₁₂, L₂₂, L₃₂ and L₄₂ obtained after reflection of the lights by the mirrors M₁', M₂₂' and M₄₂' and the concave mirror 51, respectively, travel in the same scanning direction indicated by ⊗ for an image formed on a photoreceptor 60.

Preferably, the light path changing means further comprises a plurality of planar mirrors M other than the mirrors M₁', M₂₂' and M₄₂', curved mirrors CM₁, CM₂, CM₃ and CM₄, and holographic optical elements HOE₁, HOE₂, HOE₃ and HOE₄, so as to scan the lights to form the plurality of scanning lines parallel on the image of the photoreceptor 60.

The planar mirrors M reflect the lights corresponding to the four scanning lines L₁₂, L₂₂, L₃₂ and L₄₂ reflected by the mirrors M₁', M₂₂' and M₄₂', and the concave mirror 51, respectively, to serve the light travelling paths corresponding to each scanning region in the image.

The curved mirrors CM₁, CM₂, CM₃ and CM₄ converge and reflect the lights forming scanning lines incident via the plurality of the planar mirrors M such that the scanning lines become parallel, and correct bowing of the scanning lines which is due to diffraction of the incident light by the hologram pattern and rotation of the deflection disk 35.

The holographic optical elements HOE₁, HOE₂, HOE₃ and HOE₄ diffract and transmit the incident lights at a predetermined angle such that the scanning lines go toward the photoreceptor 60 to be incident at a nearly right angle onto the photoreceptor 60.

In the multi-LSU according to the present invention, all the centers of the plurality of scanning lines formed by the deflection disk pass the rotary center of the deflection disk, so the optical arrangement of the mirrors is easy and the plurality of scanning lines have the same scanning direction.

Thus, because the main scanning directions of all the scanning lines are the same as the image formation directions, there is an advantage in that compensation for the image information in circuitry is not necessary.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s) but solely by the protection conferred by the claims.

## Claims

1. A multi-laser scanning unit (LSU) comprising:
a driving source (31) for providing a rotatory force;
a deflection disk (35) installed around a rotary shaft of said driving source, said deflection disk (35) having at least two sectors with a hologram pattern (35a) for diffracting and deflecting incident light beams, for scanning the light beams through rotation; and
at least two light sources (41,43) installed facing one surface of said deflection disk, for sending incident light beams onto the at least two sectors of said deflection disk;
**characterised in that** the multi-laser scanning unit comprises:
light beam path changing means (M) for changing the direction of at least two scanning lines (L₁₁, L₂₁, L₃₁, L₄₁), each scanning line being formed by one of the light beams being scanned by the rotation of the deflection disk (35), such that the axis of each of the scanning lines or imaginary extended line of each of the scanning lines intersects the rotary shaft axis of the deflection disk; and
a scanning direction changing means (50) for changing the direction of one scanning line (L₃₁) generated by the deflection disk to its opposite direction, such that all scanning lines (L₁₁, L₂₁, L₃₁, L₄₁) scan an image in a same scanning direction.

2. The multi-laser scanning unit of claim 1, wherein the scanning direction changing means (50) is a concave mirror (51) arranged on the path of the light beam being scanned in the opposite scanning direction by the rotation of the deflection disk (35), and the concave mirror (51) is for changing the scanning direction by converging and diverging the incident scanned light beam.

3. The multi-laser scanning unit of claim 1 or 2, wherein the light path changing means comprises:
a plurality of planar mirrors (M) for reflecting the plurality of light beams scanned and deflected by the deflection disk, to serve the light beam paths corresponding to each scan region of the image;
a plurality of curved mirrors (CM) for condensing and reflecting the light beams incident via the planar mirrors; and
a plurality of holographic optical elements (HOE) for diffracting the scanning lines reflected by the curved mirrors.

## Patentansprüche

1. Mehrfachlaser-Abtasteinheit (LSU), die umfasst.
eine Antriebsquelle (31), die eine Drehkraft erzeugt;
eine Ablenkscheibe (35), die um eine Drehwelle der Antriebsquelle herum installiert ist, wobei die Ablenkscheibe (35) wenigstens zwei Sektoren mit einer Hologrammstruktur (35a) zum Beugen und Ablenken auftreffender Lichtstrahlen aufweist, um die Lichtstrahlen durch Drehung abtastend zu führen, und
wenigstens zwei Lichtquellen (41, 43), die so installiert sind, dass sie einer Oberfläche der Ablenkscheibe zugewandt sind, um auftreffende Lichtstrahlen auf die wenigstens zwei Sektoren der Ablenkscheibe zu richten,
**dadurch gekennzeichnet, dass** die Mehrfachlaser-Abtasteinheit umfasst:
eine Lichtstrahlweg-Änderungseinrichtung, die die Richtung von wenigstens zwei Abtastzeilen (L₁₁, L₂₁, L₃₁, L₄₁) ändert, wobei jede Abtastzeile durch einen der Lichtstrahlen gebildet wird, die durch die Drehung der Ablenkscheibe (35) abtastend geführt werden und zwar so, dass die Achse jeder der Abtastzeilen oder einer imaginären verlängerten Linie jeder der Abtastzeilen die Drehwellenachse der Ablenkscheibe schneidet, und
eine Abtastrichtungs-Änderungseinrichtung (50), die die Richtung einer Abtastzeile (L₃₁), die durch die Ablenkscheibe erzeugt wird, in ihre entgegengesetzte Richtung ändert, so dass alle Abtastzeilen (L₁₁, L₂₁, L₃₁, L₄₁) ein Bild in der gleichen Abtastrichtung abtasten.

2. Mehrfachlaser-Abtasteinheit nach Anspruch 1, wobei die Abtastrichtungs-Änderungseinrichtung (50) ein konkaver Spiegel (51) ist, der auf dem Weg des Lichtstrahls angeordnet ist, der durch die Drehung der Ablenkscheibe (35) in der entgegengesetzten Abtastrichtung abtastend geführt wird, und der konkave Spiegel (51) dazu dient, die Abtastrichtung durch Sammeln und Streuen des auftreffenden Abtast-Lichtstrahls zu ändern.

3. Mehrfachlaser-Abtasteinheit nach Anspruch 1 oder 2, wobei die Lichtweg-Änderungseinrichtung umfasst:
eine Vielzahl planer Spiegel (M), die die Vielzahl von Lichtstrahlen reflektieren, die durch die Ablenkscheibe abtastend geführt und abgelenkt werden, um den Lichtstrahlenwegen zu dienen, die jedem Abtastbereich des Bildes entsprechen;
eine Vielzahl gekrümmter Spiegel (CM), die die Lichtstrahlen, die über die planen Spiegel auftreffen, bündeln und reflektieren, und
eine Vielzahl holografischer optischer Elemente (HOE), die die Abtastzeilen, die von den gekrümmten Spiegeln reflektiert werden, beugen.

## Revendications

1. Unité de balayage multi-laser (LSU) comportant :
une source d'entraînement (31) pour délivrer une force de rotation,
un disque de déviation (35) installé autour d'un arbre rotatif de ladite source d'entraînement, ledit disque de déviation (35) ayant au moins deux secteurs avec un motif d'hologramme (35a) pour diffracter et dévier des faisceaux lumineux incidents, pour amener les faisceaux lumineux à balayer au cours de la rotation, et
au moins deux sources lumineuses (41, 43) installées en vis-à-vis d'une surface dudit disque de déviation, pour envoyer des faisceaux lumineux incidents sur les aux moins deux secteurs dudit disque de déviation,
**caractérisée en ce que** l'unité de balayage multi-laser comporte :
des moyens de changement de trajet de faisceau lumineux (M) pour changer la direction d'au moins deux lignes de balayage (L₁₁, L₂₁, L₃₁, L₄₁), chaque ligne de balayage étant formée par l'un des faisceaux lumineux amené à balayer par la rotation du disque de déviation (35), de sorte que l'axe de chacune des lignes de balayage ou d'une ligne imaginaire prolongée de chacune des lignes de balayage coupe l'axe de l'arbre rotatif du disque de déviation, et
un moyen de changement de direction de balayage (50) pour changer la direction d'une ligne de balayage (L₃₁) générée par le disque de déviation en sa direction opposée, de sorte que toutes les lignes de balayage (L₁₁, L₂₁, L₃₁, L₄₁) balaient une image dans une même direction de balayage.

2. Unité de balayage multi-laser selon la revendication 1, dans laquelle le moyen de changement de direction de balayage (50) est un miroir concave (51) agencé sur le trajet du faisceau lumineux amené à balayer dans la direction de balayage opposée par la rotation du disque de déviation (35), et le miroir concave (51) est destiné à changer la direction de balayage en faisant converger et diverger le faisceau lumineux incident amené à balayer.

3. Unité de balayage multi-laser selon la revendication 1 ou 2, dans laquelle les moyens de changement de trajet lumineux comportent :
une pluralité de miroirs plans (M) pour réfléchir la pluralité de faisceaux lumineux amenés à balayer et déviés par le disque de déviation, afin de servir de trajets de faisceau lumineux correspondant à chaque région de balayage de l'image,
une pluralité de miroirs courbes ( CM) pour condenser et réfléchir les faisceaux lumineux incidents via les miroirs plans, et
une pluralité d'éléments optiques holographiques (HOE) pour diffracter les lignes de balayage réfléchies par les miroirs courbes.
